# EUROPEAN PATENT APPLICATION

(11) **EP 1 080 678 A1**
(43) Date of publication of application: **07.03.2001**
(21) Application number: 00118696.4
(22) Date of filing: 29.08.2000
(51) Int. Cl.: A47J 42/38

(54) **Pepper and salt delivering pot**

(30) Priority: 03.09.1999 IT MI990541
(71) Applicant: Acea Manodomestici S.R.L., 28883 Gravellona Toce (Verbania) (IT)
(72) Inventor: Smeenk, Nico, 28887 Omegna (Verbania) (IT)
(74) Representative: Cicogna, Franco

(57) **Abstract**

A pepper and salt delivering pot comprises a device for trituring the product held in the pot, and being characterized in that the pot comprises a box-like body (2) having at least an open side and a swinging cover (4), pivoted to the box-like body (2).

The swinging cover can assume at least two positions, i.e. a closed position in which the open side is closed by the cover, and an open position, in which the cover does not engage the open side, thereby allowing free access to the pot inside.

## Description

### BACKGROUND OF THE INVENTION

The present invention relates to a pepper, salt and the like product metering pot.

Pepper grinding devices, including a pot in which the pepper grains are ground during use are already known and broadly used.

The above mentioned devices have a plurality of advantages mainly related to the fact that they allow to properly preserve the organoleptic characteristics of the pepper material, since it is held in a grain form inside the pot and is ground or triturated exclusively the pepper portion required for the contingent use.

The aesthetic aspect of the above mentioned devices is very important, and novel configurations thereof are extensively studied: on the other hand, they must meet some essential functional requirements such as, for example, the possibility of easily filling the pot, as the contents thereof are exhausted, as well as an easy operation of the trituring or grinding device.

### SUMMARY OF THE INVENTION

Accordingly, the aim of the present invention is to provide such a pepper, salt and the like product delivering pot which has very good aesthetic and operating characteristics.

Within the scope of the above mentioned aim, a main object of the invention is to provide such a pepper, salt and the like product delivering pot, which can be easily refilled.

Yet another object of the present invention is to provide such a pepper, salt and the like product delivering pot which is very simple construction-wise and can be made in a greatly advantageous and efficient manner.

According to one aspect of the present invention, the above mentioned aim and objects, as well as yet other objects, which will become more apparent hereinafter, are achieved by a pepper, salt and the like product delivering pot, comprising a device for trituring the product held herein and being characterized in that said pot comprises a box-like body having at least an open side and a swinging cover pivoted to said box-like body and adapted to define at least two positions, i.e. a closing position, in which the open side is closed by said cover, and an opening position, in which said cover does not engage the open side, thereby providing a free access to the inside of said pot.

### BRIEF DESCRIPTION OF THE DRAWINGS

Further characteristics and advantages of the present invention will become more apparent hereinafter from the following detailed disclosure of the subject delivering pot which is illustrated, by way of an indicative, but not limitative, example, in the accompanying drawings, where:
Figure 1 is a perspective view of the delivering or metering pot according to the present invention, in a closed use position thereof;
Figure 2 is a view similar to Figure 1 but showing the delivering pot in an open position, in which said pot can be refilled; and
Figure 3 is an exploded perspective view of the delivering pot according to the invention.

### DESCRIPTION OF THE PREFERRED EMBODIMENT

With reference to the number references of the above mentioned figures, the pepper, salt and the like product delivering pot according to the present invention, generally indicated by the reference number 1, comprises a box-like body 2, having a substantially quadrangular configuration, and including at least an open side 3, which can be closed by a swinging or tilting cover 4.

More specifically, the box-like body 2 comprises a bottom opening, where is arranged a trituring or grinding device 5, which can be of any known types, for example of a type driven by a rod 6 vertically passing through the box-like body 2 and exiting at the top from a top hole 7 formed through said box-like body 2.

The top end portion of the rod 6 is rigid with a gripping body 8, which can be rotatively driven by the user in order to grind the pepper grains held in the pot.

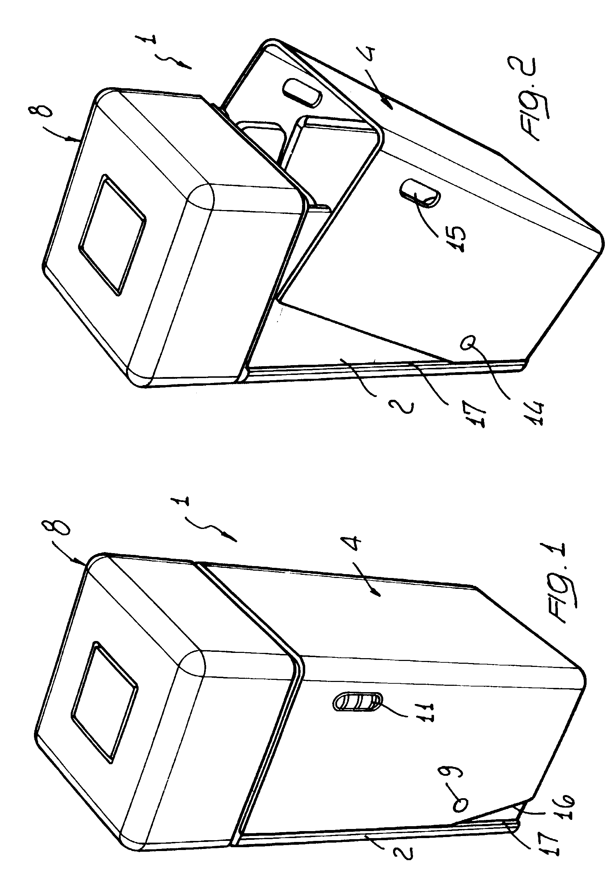

The gripping body 8 is advantageously so arranged as to properly fit the quadrangular configuration of the box-like body 2, as is clearly shown in Figure 1.

In particular, the box-like body 2 is provided, on each of said side faces, with a pin 9 and, at the top, with a fin 10, formed by providing two cut-outs in the wall and having a tooth element 11.

The cover 4 comprises a front wall 12 and two side walls 13, each of which is provided with a bottom hole 14 and a top slot 15, respectively, designed for engaging the pin 9 and tooth element 11 of the corresponding side face of the body 2.

More specifically, the pin 9 engages the hole 14 arranged at a cut-out 16 of the side wall 13, thereby allowing the cover 4 to swing about the rotary axis passing through the centers of the holes 14 and pins 9.

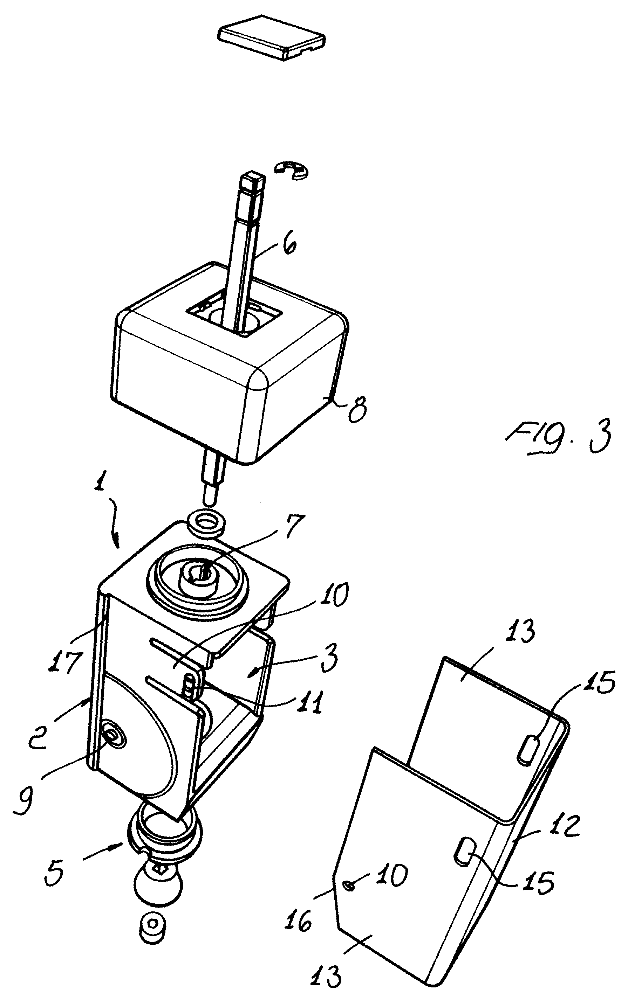

The swinging movement of the cover 4 is limited by the edge 17 formed on the bottom wall of the body 2, so as to operate as an abutment for the side walls 13 of the cover, in the closed position thereof shown in figure 1, and to further operate as an abutment for the corner of the cut-out 16, as the cover is arranged in its open position, as is shown in Figure 2.

The cut-out 16, accordingly, will allow the cover 4 to be opened through a sufficient angle to provide access to the inside of the delivering pot, for example for refilling said pot, while preventing the contained product from exiting.

The opening and closing of the cover 4 are performed by exploiting the resilient characteristics of the fins 10, supporting the respective tooth element 11 which are suitably beveled in order to facilitate the insertion into and exiting from the slots 15.

The operation of the delivering pot according to the invention is very simple.

In fact, it would be sufficient to engage or grip the cover 4 and causing it to turn about the pins 9, in order to open the pot and fill-in it with pepper, salt or any other desired product.

As shown, the pins 9 are horizontally arranged, and can be located at any suitable positions of the subject delivering pot.

It should be apparent that said pins 9 can be differently arranged and oriented.

After the filling-in operation, the pot will be snap reclosed, and then it will be sufficient to turn the gripping body 8 in order to grind and deliver or meter the product.

Advantageously, said box-like body 2 is made of a transparent or clear plastic material, whereas the swinging cover can be made of a steel or other metal materials.

The contents of the pot can be seen through the clear walls of the box-like body 2.

It should be apparent that, in order to open the cover 4, it would be sufficient to press the tooth elements 11 by the finger tips, in order to allow the tooth elements to exit the slots 15.

This constructional feature can be also used with a body made with a non transparent plastic material, a metal material or any other desired material.

The above disclosed pots will be conventionally used in pairs, i.e. one for the pepper and the other for the coarse salt.

It has been found that the invention fully achieves the above mentioned aim and objects.

In practicing the invention, the used materials, and the contingent size and shapes can be any, depending on requirements and according to the status of the art.

## Claims

1. A pepper, salt and the like product delivering pot, comprising a device for trituring the product held herein and being characterized in that said pot comprises a box-like body having at least an open side and a swinging cover pivoted to said box-like body and adapted to define at least two positions, i.e. a closing position, in which the open side is closed by said cover, and an opening position, in which said cover does not engage the open side, thereby providing a free access to the inside of said pot.

2. A delivering pot, according to Claim 1, characterized in that said box-like body has a substantially quadrangular configuration and said cover has a U-shape cross-section, adapted to encompass two sides of the box-like body.

3. A delivering pot, according to Claim 1 or 2, characterized in that said delivering pot comprises resilient engaging means for engaging said box-like body and said swinging cover.

4. A delivering pot, according to one or more of the preceding claims, characterized in that said resilient engaging means comprise at least a tooth element, provided on a flexible fin formed in a wall of said box-like body, said tooth element being designed for engaging with at least a slot formed through said swinging cover.

5. A delivering pot, according to one or more of the preceding claims, characterized in that at least said box-like body or swinging cover is made of a clear material.

6. A delivering pot, according to one or more of the preceding claims, characterized in that said box-like body is made of a clear plastic material and said swinging cover is made of a steel material.

7. A delivering pot, according to one or more of the preceding claims, characterized in that said box-like body comprises a wall, opposite to the open side, and provided with at least an edge adapted for abutting against at least a side of said cover, both in said open position and in said closed position thereof.

8. A delivering pot, according to one or more of the preceding claims, characterized in that said delivering pot comprises horizontally arranged pins.

9. A delivering pot, according to one or more of the preceding claims, characterized in that said pins can be arranged at any suitable position of said delivering pot.

10. A delivering pot, according to one or more of the preceding claims, characterized in that said pins can be differently arranged and oriented.

11. A delivering pot, according to one or more of the preceding claims, characterized in that it comprises one or more of the disclosed and/or illustrated features.
